# EUROPEAN PATENT APPLICATION

(11) **EP 4 803 285 A1**
(43) Date of publication of application: **09.09.2026**
(21) Application number: 25161282.6
(22) Date of filing: 03.03.2025
(51) Int. Cl.: B29C 48/275, B29C 48/385, B29C 48/92, B29B 7/66, B29B 7/72, B29C 48/39, B29C 48/04, B29C 48/05, B29B 9/12, B29C 48/40

(54) **PROCESS OF PREPARING A POLYOLEFIN COMPRISING A RECYCLED FRACTION**

(71) Applicant: Basell Polyolefine GmbH, 50389 Wesseling (DE)
(72) Inventor: BECKER, Thomas, 65926 Frankfurt / M. (DE); CONSALVI, Marco, 44122 Ferrara (IT); SCHUELLER, Ulf, 65926 Frankfurt/M (DE); SCHMITZ, Harald, 65926 Frankfurt/M. (DE)
(74) Representative: LyondellBasell

(57) **Abstract**

A process for preparing a polyolefin composition comprising a first polyolefin and a second polyolefin material, wherein at least the first polyolefin material is derived from post-consumer and/or post-industrial waste. The process is carried out in a cascade extrusion process, and comprises the steps of supplying recycled polyolefin material to a first stage extruder and forming a molten first polyolefin material, which is processed under visbreaking conditions. The molten recycled polyolefin is fed to a second stage extruder downstream of a second polyolefin feed. Second polyolefin material is fed at a flow rate to the second stage extruder extruding the polyolefin composition in a pelletized form. The process comprises the steps of measuring the viscosity of the molten first polyolefin material and adjusting the temperature and/or SEI value of the first stage extruder in response to a difference between the measured viscosity and a pre-set target viscosity.

## Description

### FIELD OF THE DISCLOSURE

The present disclosure relates to a continuous process for preparing a polyolefin composition comprising a first polyolefin fraction and a second polyolefin fraction, wherein at least the first polyolefin fraction is derived from post-consumer and/or post-industrial waste.

### BACKGROUND OF THE DISCLOSURE

Polyolefins, are increasingly consumed in large amounts for many applications, including packaging for food and other goods, fibers, automotive components, and a great variety of manufactured articles. However, the said massive use of polyolefins is creating a concern as regards the environmental impact of the waste materials generated after the first use.

In view of current market developments that seek for reduction of environmental footprint in the value chain of materials, including polymer materials, there is an ongoing drive to re-use materials, and to reduce the quantity of "new" materials that are used in the production of a variety of articles.

In field of applications of polymer materials, this translates to a desire to recycle materials and to reduce the quantity of so-called "virgin" polymer material, i.e. polymer material that is provided as new polymers obtained from polymerization processes, such as from polymerization processes of fossil materials-based monomeric materials and/or biologically derived monomers.

Thus, an advantageous source of polyolefin material is presently represented by polyolefin recyclate, mainly coming from recovery of post-consumer and/or industrial plastic waste.

As a result, a common attempt to mitigate the problem is that of replacing, at least partially, virgin polyolefin compositions with variable amounts of recycled plastic materials deriving from streams of post-consumer or of post-industrial wastes.

However, recycled plastic materials are a broad mix of different plastic materials comprising a dominant main component and various impurities. Thus, the recycled plastic materials can vary in its melt flow rate, which makes it harder to use a mix of that material for producing a new application product.

Consequently, the present disclosure aims at providing a process for effectively preparing a polyolefin comprising a first polyolefin material and a second polyolefin material, wherein at least the first polyolefin material is derived from post-consumer and/or post-industrial waste.

### SUMMARY OF THE DISCLOSURE

This object is solved by a process for preparing a polyolefin composition comprising a first polyolefin material and a second polyolefin material, wherein at least the first polyolefin material is derived from post-consumer and/or post-industrial waste, said process being carried out in a cascade extrusion process comprising the following steps:
(i) supplying the first polyolefin material to a first stage extruder and forming a molten first polyolefin material;
(ii) processing the molten first polyolefin material in the first stage extruder at a temperature from 280°C to 500°C and a SEI value from 0.15 to 0.7 kWh/kg;
(iii) feeding the molten first polyolefin material stream coming from the first extruder to a feeding inlet of a second stage extruder located after a feeding point of the second polyolefin material;
(iv) feeding the second polyolefin material at a flow rate to said feeding point of the second stage extruder device and extruding the polyolefin composition in a pelletized form;
(v) measuring a viscosity of the molten first polyolefin material;
said process being characterized in that a computing unit operation device, receiving data on measured viscosity of the molten first polyolefin material adjusts the temperature and/or SEI value of the first stage extruder in response to a difference between the measured viscosity of the molten first polyolefin material and a pre-set target viscosity.

The process of the present disclosure allows for an economic and reliable production of pelletized polyolefin compositions having a recycled polyolefin component. The recycled first polyolefin material is being extruded in the first extruder under thermal visbreaking conditions, which has shown to be an effective tool for tuning the recycled polyolefin stream to a lower viscosity level. The visbroken recycled polyolefin stream can further on be compounded with a second polymer stream, e.g. a virgin polyolefin or second recycled polyolefin stream, in the second extruder to boost the final properties of the compound. As by nature, the recycled polyolefin material may vary in its composition and the visbreaking process is depending on the starting viscosity of the material, the viscosity of the polymer melt stream leaving the first extruder may vary, which in turn results in fluctuations of the final product's properties. To counteract these fluctuations, the present disclosure according to claim 1, measures the viscosity of the molten first polyolefin material and adjusts the temperature and/or specific energy input of the first stage extruder in response to a difference between the measured viscosity of the molten first polyolefin material and a pre-set target viscosity. By adjusting the temperature and/or specific energy input to the first extruder, the degree of visbreaking will be adjusted until the pre-set target viscosity is reached. Consequently, an immediate process control is provided preventing greater fluctuations in the final product specifications, in particularly viscosity.

Hereinafter, further developments are specified which can be combined with one another as desired, independently of one another.

In some embodiments, the specific energy input of the first extruder is adjusted in response to a difference between the measured viscosity of the molten first polyolefin material and a pre-set target viscosity. The specific energy input may for example be adjusted by varying a motor speed of the first extruder.

The second polyolefin material may also be derived from post-consumer and/or post-industrial waste. However, in a preferred embodiment, the second polyolefin material may be a virgin polyolefin. The "virgin" polyolefin may be defined as newly produced polyolefins prior to first use and not being recycled. The virgin polyolefin may be derived from polymerization of olefins such as ethylene, propylene, butene-1, hexene-1 and octene-1 as well as mixtures thereof.

The cascade extrusion process may comprise at least two extruders arranged in sequence, i.e. the output of a first extruder is fed to the second extruder. The cascade extrusion process may be executed in a cascade of two to four extruder devices, preferably two extruder devices.

Depending on the needs, the sorting of polyolefin fraction can be enhanced in order to obtain an as much as possible pure fraction of either polypropylene or polyethylene in the recycled polyolefin component. Preferably, the recycled polyolefin component comprises a mixture of polyethylene (PE) and polypropylene (PP) polymers in a weight ratio 99:1 to 1:99. When PP is more abundant in the mixture, its weight ratio with PE is preferably higher than 80:20, more preferably higher than 90:10, and especially from 95:5 to 99:1. When PE is more abundant in the mixture, its weight ratio with PP is preferably higher than 80:20, more preferably higher than 90:10, and especially from 95:5 to 99:1. The polyethylene (PE) fraction can contain one or more of high density polyethylene (HDPE), low-density polyethylene (LDPE), linear low density polyethylene (LLDPE). Polypropylene fraction (PP) can be either propylene homopolymer or a propylene copolymer with lower amount of ethylene and/or butene. In addition, the recycled polyolefin component may comprise other polyolefins like polybutene. In a particular embodiment, the recycled polyolefin component may comprise also polymeric mixtures that incorporates other materials like polystyrene (PS), ethyl-vinyl acetate copolymer (EVA), ethyl-vinyl alcohol copolymer (EVOH), polyvinyl chloride (PVC), or mixtures thereof. In a preferred embodiment, the recycled polyolefin material feedstock is constituted by more than 80 wt.% and preferably more than 90 wt.% of a mixture between polyethylene and polypropylene.

In some embodiments, a filtering device is provided downstream of the first stage extruder for removing contaminants from the recycled polyolefin melt. In this embodiment, the viscosity of the molten first polyolefin material is preferably measured downstream of the filtering device.

In some embodiments, the first stage extruder device is provided with a vacuum degassing section for humidity removal.

In some embodiments, a mixing device is provided upstream of the extruder device. The second polyolefin material, the first polyolefin material and optionally one or more additives may be fed to the mixing device and further homogenized before feeding the mixture to the extruder device, in particular a hopper of the extruder device. Thus, the components for melt blending may be further homogenized before melting leading to a reduction of a gel level in the final composition.

In some embodiments, the second polyolefin material may be fed to the mixing device upstream of a location at which the first polyolefin component is fed to the mixing device.

In some embodiments, the first polyolefin material may be fed separately to the extruder device. In this embodiment, the virgin polyolefin and one or more additives may be mixed in the mixing device forming a mixture that is fed to the extruder device separately to the recycled polyolefin component.

Preferably, a detecting unit may be provided, which measures at least one parameter of the polyolefin composition after the second stage extruder. The computing unit operation device receives the data from the detecting unit and may adjust the flow rate of the virgin polyolefin to the second stage extruder in response to a difference between the measured parameter and a preset target parameter. The detecting unit may for example be a rheometer, which measures the viscosity of the polyolefin composition. With the information of both data of the molten recycled polyolefin after the first stage extruder as well as the polyolefin composition after the second stage extruder the final product properties can be better controlled.

In some embodiments, the first polyolefin material is provided in pelletized form.

In some embodiments, the second polyolefin material is a bimodal or multimodal polyolefin, preferably a bimodal or multimodal polyethylene.

In some embodiments, the second polyolefin material may be a polyethylene homo- or copolymer.

In some embodiments, the first polyolefin material may be provided in the form of flakes. In this embodiment, the flakes may be molten, e.g. in a primary extruder, before the melt of the first polyolefin material is mixed with the second polyolefin material in the extruder device. In this the continuous production of the second polyolefin component may be combined with the continuous production of the first polyolefin component.

### BRIEF DESCRIPTION OF THE DRAWINGS

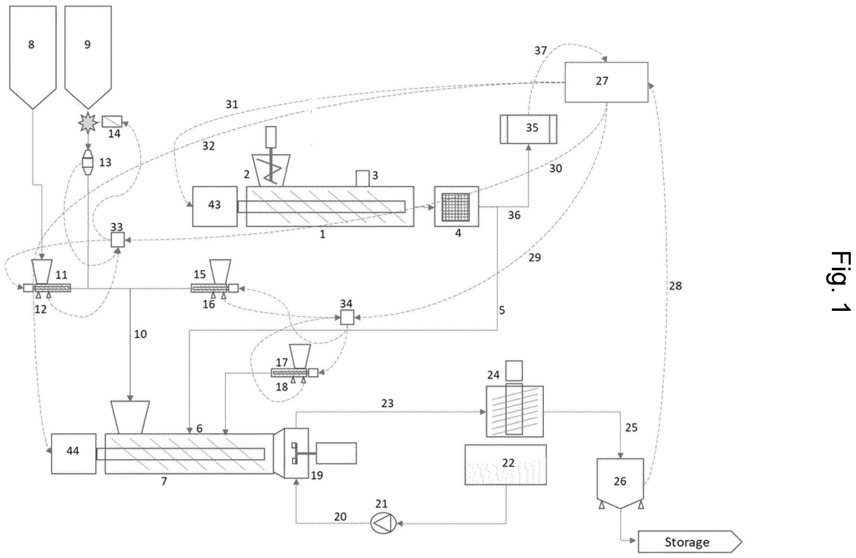

Figure 1 shows schematically an exemplary set-up for an extrusion process according to an exemplary embodiment of the present disclosure.

### DETAILED DESCRIPTION OF THE DISCLOSURE

While multiple embodiments are disclosed, still other embodiments will become apparent to those skilled in the art from the following detailed description. As will be apparent, certain embodiments, as disclosed herein, are capable of modifications in various obvious aspects all without departing from the spirit and scope of the claims as presented herein. Accordingly, the drawings and detailed description are to be regarded as illustrative in nature and not restrictive.

In the context of the present disclosure;
- the percentages are expressed by weight, unless otherwise specified;
- the total weight of a polymer composition sums up to 100% by weight, unless otherwise specified;
- the term "comprising" referred to a polymer, a plastic material, a polymer composition, mixture or blend, should be construed to mean "comprising or consisting essentially of";
- the term "consisting essentially of" means that, in addition to those components which are mandatory, other components may also be present in the material, provided that the essential characteristics of the material are not materially affected by their presence. Examples of components that, when present in customary amounts, do not materially affect the characteristics of a polymer or of a polyolefin composition, mixture or blend are catalyst residues, antistatic agents and processing aids;
- the term "copolymer" is referred to a polymer deriving from the intentional polymerization of at least two different comonomers, i.e. the term "copolymer" includes terpolymers;
- the terms "pre-consumer waste" and "post-industrial waste" are synonyms and designate a material diverted from the waste stream originating from a manufacturing process. It might be material trimmings, faulty items, overstock raw materials, excess inventory, etc.;
- the term "post-consumer waste" designate a material that is discarded after it has been used by a final consumer;
- the terms "recycled polyolefin material", "recyclate" and "recycled" indicate recovered material from either post-consumer waste (PCW) or post industrial waste (PIW) which includes a fraction made of polyolefins. Consequently PCW or PIW is derived from end products that have completed their life cycle as consumer goods and would otherwise be disposed of as waste (e.g. polyethylene water bottles), or from plastic waste generated as waste from industrial processes. Post-consumer polyolefins include polyolefins already collected in commercial and residential recycling programs, including flexible packaging (cast film, blown film and BOPP film), rigid packaging, blow molded bottles and injection molded containers. Typically, two main polyolefin fractions are obtained through separation;
- the term "virgin" defines newly produced polyolefins prior to first use and not being recycled. The virgin polymer may be obtained from polymerization processes, such as from polymerization processes of fossil materials-based monomeric materials and/or biologically derived monomeric materials. Biobased polyethylenes and monomers are derived from natural products and are distinguished from polymers and monomers obtained from fossil-fuel sources. Because biobased materials are obtained from sources that may actively reduce CO₂ in the atmosphere or otherwise require less CO₂ emission during production, such materials are often regarded as "green" or renewable. The virgin polyolefin can derive from polymerization of olefins such as ethylene, propylene, butene-1, hexene-1 and octene-1 and mixtures thereof;
the term "specific energy input (SEI)" refers to the energy input that is mechanically applied to the melt through the rotation of the screws and which correlates to the power consumption of the motor. It can be expressed in kWh/kg. The higher the temperature and/or the SEI value, the higher will be the melt flow index value resulting from the thermal visbreaking step.

Specific examples of the olefinic polymers are high density ethylene polymers (HDPE, having a density higher than 0.940 g/cc), comprising ethylene homopolymers and copolymers of ethylene with alpha-olefins having 3-12 carbon atoms; linear low density polyethylenes (LLDPE, having a density lower than 0.940 g/cc) and very low density and ultra-low density (VLDPE and ULDPE, having a density lower than 0.920 g/cc, to 0.880 g/cc) consisting of copolymers of ethylene with one or more alpha-olefins having from 3 to 12 carbon atoms, having a mole content of units derived from the ethylene higher than 80%; isotactic polypropylenes and crystalline copolymers of propylene and ethylene and/or other alpha-olefins having a content of units derived from propylene higher than 85% by weight; copolymers of propylene and 1-butene having a content of units derived from 1-butene comprised between 1 and 40% by weight; heterophasic copolymers comprising a crystalline polypropylene matrix and an amorphous phase comprising copolymers of propylene with ethylene and/or other alpha-olefins.

The above mentioned polyolefins can be obtained by polymerizing the relative monomers in the presence of any type of polymerization catalyst, such as single-site or heterogeneous Ziegler Natta catalysts, and using platform technologies known in the art such as liquid phase polymerization, gas-phase polymerization and hybrid liquid/gas-phase polymerization.

The process of the present disclosure is in particular a process for preparing polyolefin compositions comprising polyolefins which were obtained by homopolymerization or copolymerization of ethylene or propylene. As comonomers in propylene polymerization preference is given to using up to 40 wt.% of ethylene and/or 1-butene.

In a preferred embodiment, the process of the present disclosure refers to preparing a polyolefin composition comprising polyolefins obtained by homopolymerizing or copolymerizing ethylene. Particular preference is given to preparing bimodal or multimodal polyolefin compositions comprising polyethylenes in which ethylene is copolymerized with up to 40 wt.% of C₃-C₈-1-alkenes, preferably butene-1, pentene-1, hexene-1, octene-1 or mixtures thereof. Particular preference is given to a process in which ethylene is copolymerized with up to 20 wt.% of butene-1, hexene-1 or mixtures thereof.

All industrially known polymerization methods may be used for preparing the virgin polyolefin components. This includes solution processes, suspension processes and gas-phase processes. The polymerization can be carried our batchwise or preferably continuously in two or more stages. Processes of this type are generally known to those skilled in the art. Among the polymerization processes mentioned, gas-phase polymerization, in particular in gas-phase fluidized bed reactors or multi-zone circulating gas-phase reactors and suspension polymerization, in particularly in loop reactors or stirred tank reactors are preferred.

The process of the present disclosure may be employed for preparing polyolefin compositions of all types of common polyolefin polymers. The process of the present disclosure is especially suitable for preparing polyolefin compositions comprising bimodal or multimodal polyolefins, wherein the terms bimodal and multimodal refer to the modality of the molecular weight distribution. Such polymers may be obtained from polymerizing olefins in a cascade of two or more polymerization reactors under different reaction conditions. Thus, the "modality" indicates how many different polymerization conditions were utilized to prepare the polyolefin, independently whether this modality of the molecular weight distribution can be recognized as separated maxima in a gel permeation chromatography (GPC) curve or not. As used herein, the term "multimodal" may define polyolefins have more than two modalities and thus excludes "bimodal". In addition to the molecular weight distribution, the polyolefin polymer can also have a comonomer distribution, wherein preferably the average comonomer content of polymer chains with a higher molecular weight is higher than the average comonomer content of polymer chains with a lower molecular weight. It is however also possible to employ identical or very similar reaction conditions in all polymerization reactors of the reaction cascade and so prepare narrow molecular weight polyolefin polymers. A complication in producing multimodal polyolefins in a cascade of polymerization reactors operating at different conditions is however that, caused by different residence times of individual polyolefin particles in the different reactor, the composition of the individual polyolefin particles of a polyolefin powder may vary strongly.

The polymerization can be carried out using all customary olefin polymerization catalyst. That means the polymerization can be carried out, for example, using Phillips catalysts based on chromium oxide, using titanium-based Ziegler- or Ziegler-Natta-catalysts, using single site catalysts, or using mixtures of such catalysts. The preparation and use of these catalysts for olefin polymerization are generally known.

The polyolefins are preferably obtained as powder that means in form of small particles. The particles which have usually a more or less regular morphology and size, depending on the catalyst morphology and size, and on polymerization conditions. Depending on the catalyst used, the particles of the polyolefin powder usually have a mean diameter of from a few hundred to a few thousand micrometers. In the case of chromium catalysts, the mean particle diameter is usually from about 300 to about 1600 micrometers, and in the case of Ziegler type catalysts the mean particle diameter is usually from about 100 to about 3000 micrometers. The particle size distribution can, for example, advantageously be determined by sieving. Suitable techniques are e.g. vibrating sieve analysis or sieve analysis under an air jet.

In some embodiments, the virgin polyolefin component may be a low density polyethylene (LDPE).

There are two basic high pressure polymerization processes for the manufacture of LDPE: autoclave and tubular.

The LDPE made by the autoclave reactor process ("autoclave LDPE") has a high concentration of long chain branches, resulting into high values of elongation hardening, and a relatively broad molecular weight distribution that make it easy to process.

The autoclave polymerization may be carried out in the presence of radical initiating agents selected from organic peroxides.

The tubular reactor process does not necessarily require the use of organic peroxides. It can be carried out by using oxygen alone as the radical initiating agent, thus allowing to prepare LDPE which is free from products of chemical degradation of organic peroxides.

The said LDPE can also be prepared with a mixed process combining both autoclave and tubular reactors.

The said processes and the resulting LDPE product are well known in the art. For instance, U.S. Patent No. 3,691,145 and U.S. Patent Application No. 2010/0076160 teach producing LDPE in a tubular reactor process. In said processes the resulting LDPE may be provided in molten form to the extruder device.

In preferred embodiments, preferably in embodiments, in which the second polyolefin is provided as a polyolefin powder, the polyolefin is additionally combined with one or more additives. Such additives are common in the art. Especially for multimodal polyolefins it is however essential that they are very uniformly distributed within the polyolefin. Examples of additives for preparing polyolefin compositions are antioxidants, light stabilizers, acid scavengers, lubricants, processing aids, antiblocking agents, slip agents, antistatic agents, antifogging agents, pigments or dyers, nucleating agents, flame retardants or fillers. It is common that several additives are added to the polyolefin compositions. The multiple additives can be different types of additives. It is however also possible that several representatives of one type of additives are added to one polyolefin composition. Additives of all these types are generally commercially available and are described, for example, in Hans Zweifel, Plastics Additives Handbook, 5^{th} Edition, Munich, 2001.

In some embodiments, one of the additives supplied to the extruder device is an organic peroxide, such as dicumyl peroxide, di-tert-butyl peroxide, tert-butylperoxybenzoate, 2,5-dimethyl-2,5-di(tert-butylperoxy)hexane, 3,6,9-triethyl-3,6,9-trimethyl-1,2,4,5,7,8-hexoxonane, representatives of 3,6,9-trimethyl-3,6,9-tris(alkyl)-1,2,4,5,7,8-hexoxonanes in which the alkyl radical is propyl or ethyl, tertbutylperoxyneodecanoate, tert-amyl peroxypivalate, 1,3-bis(tert-butylperoxyisopropyl)benzene, and the like. Preferably, the organic peroxide is 2,5-dimethyl-2,5-di(tert-butylperoxy)hexane, 3,6,9-triethyl-3,6,9-trimethyl-1,2,4,5,7,8-hexoxonane, or a representative of 3,6,9-trimethyl-3,6,9-tris(alkyl)-1,2,4,5,7,8-hexoxonanes in which the alkyl radical is propyl or ethyl.

In a preferred embodiment of the present disclosure, the organic peroxide is employed in form of a polyolefin mixture, which is preferably prepared by adding the organic peroxide in pure form or as a solution in a diluent like a hydrocarbon to a polyolefin powder. Preferred polyolefin mixtures have a content of the organic peroxide in the polyolefin mixture in the range from 0.5 to 24 wt.%, preferably from 1 to 20 wt.% and more preferably from 2 to 10 wt.%.

Preferably, the recycled polyolefin material results from the sorting of the PCW or PIW aimed at selecting the polyolefin fraction.

Depending on the needs, the sorting of polyolefin fraction can be enhanced in order to obtain an as much as possible pure fraction of either polypropylene or polyethylene. Preferably, the recycled polyolefin material comprises a mixture of polyethylene (PE) and polypropylene (PP) polymers in a weight ratio 99:1 to 1:99. When PP is more abundant in the mixture, its weight ratio with PE is preferably higher than 80/20, more preferably higher than 90/10, and especially from 95/5 to 99:1. When PE is more abundant in the mixture, its weight ratio with PP is preferably higher than 80/20, more preferably higher than 90/10, and especially from 95/5 to 99:1. The polyethylene (PE) fraction can contain one or more of high density polyethylene (HDPE), low-density polyethylene (LDPE), linear low density polyethylene (LLDPE). Polypropylene fraction (PP) can be either propylene homopolymer or a propylene copolymer with lower amount of ethylene and/or butene. In addition, the feedstock may comprise other polyolefins like polybutene. In a particular embodiment, the feedstock may comprise also polymeric mixtures that incorporates other materials like polystyrene (PS), ethyl-vinyl acetate copolymer (EVA), ethyl-vinyl alcohol copolymer (EVOH), polyvinyl chloride (PVC), or mixtures thereof. In a preferred embodiment, the recycled polyolefin material feedstock is constituted by more than 80 wt.% and preferably more than 90 wt.% of a mixture between polyethylene and polypropylene.

Suitable extruder devices for the process of the present disclosure are extruders or continuous mixers. These extruders or mixers can preferably be two-stage machines which melt and homogenize the polyethylene composition. Examples of extruders are pin-type extruders, planetary extruders or corotating disk extruders. Other possibilities are combinations of mixers with discharge screws and/or gear pumps. Preferred extruders are screw extruders and in particular extruders constructed as twin-screw machine. Particular preference is given to twin-screw extruders and continuous mixers with discharge elements and especially to continuous mixers with counter rotating and intermeshing double screw or the extruder device comprises at least one co-rotating double screw extruder. Machinery of this type is conventional in the plastics industry and is manufactured by, for example, Coperion GmbH, Stuttgart, Germany; KraussMaffei Berstorff GmbH, Hannover, Germany; The Japan Steel Works LTD., Tokyo, Japan; Farrel Corporation, Ansonia, USA; or Kobe Steel, Ltd., Kobe, Japan. Suitable extruder devices are further usually equipped with units for pelletizing the melt, such as underwater pelletizers.

In some embodiments, at least the second polyolefin material and optionally one or more additives may be mixed in a mixing device prior to feeding the mixture to the extruder device. The first polyolefin material may be added directly to the extruder device or they may be added to the mixing device. The mixing device may be any apparatus which allows dry-blending of particles. The mixing device can operate continuously or discontinuously. Preferably, the mixing device operates continuously.

Preferred dry-blending devices are paddle mixers comprising one or two horizontally orientated rotating shafts, more preferably two horizontally orientated counter-rotating shafts. The shafts are equipped with paddles of an appropriate geometry. The rotating shafts move the composition of polyolefin powder and additives horizontally along the axis of the shafts and at the same time mix the composition intensively. Such paddle mixers are commercially available, for example, from Köllemann GmbH, Adenau, Germany or J. Engelsmann AG, Ludwigshafen, Germany. Preferred mixing devices are further vertical batch mixers such as Henschel-Mixers^{®} available from Zeppelin Systems GmbH, Kassel, Germany. Preferred dry-blending devices are also single screw conveyors equipped with blending elements. Preferably, such blending elements are amendable devices such as adjustable paddles or slotted flights to allow controlling the level of blending.

The recycled polyolefin and optionally the one or more additives are preferably supplied from dedicated storage vessels. It is however also possible to supply said recycled polyolefin and optionally one or more additives directly from transport containers such as big bags. The additives which are utilized for preparing the polyolefin compositions of the present disclosure can be supplied in solid form, preferably in form of small particles, or they can be liquid or they are fed in dissolved form. It is possible to supply all additives individually or it is possible to supply one or more mixtures of additives comprising some of the selected additives or a mixture of all additives is supplied with the virgin polyolefin. Preferably all additives are supplied in form of solid particles.

The prepared polyolefin compositions comprises preferably a virgin polyolefin material, recycled polyolefin material and optionally one or more additives. The composition of the prepared polyolefin compositions is preferably defined by a recipe which identifies the nature of the employed virgin polyolefin, the nature of the employed recycled polyolefin material, the nature of the additives, their number, their quantity and their ratio. The constitution of the prepared polyolefin compositions may differ significantly from prepared polyolefin compositions to prepared polyolefin compositions. However, all polyolefin compositions may comprise a majority of polyolefin. Preferably the polyolefin portion of the prepared polyolefin compositions is from 80 to 99.98 wt.%, more preferably from 95 to 99.95 wt.% and especially from 98 to 99.9 wt.%. The present disclosure not only refers to continuously preparing such polyolefin compositions comprising a virgin polyolefin fraction and a recycled polyolefin fraction but also to producing these compositions accurately with a very constant properties, like the melt flow rate, in an economical and reliable way.

The first polyolefin material is fed to the first stage extruder, which is operated under thermal visbreaking conditions. Thermal visbreaking includes a treatment of the polyolefin at a temperature and/or mechanical shear energy sufficient to cause polymer chain scission to predominate over polymer chain branching or crosslinking.

In some embodiments, the thermal visbreaking is carried out by heating the polyolefin at a temperature equal to or greater than 280°C, preferably at a temperature equal to or greater than 290°C, more preferably at a temperature equal to or greater than 300°C, most preferably at a temperature equal to or greater than 310°C, the preferred upper limit being of 500°C in all cases.

In particular, the thermal visbreaking can be carried out at the following temperatures:
- from 280°C to 500°C; or
- from 290°C to 500°C; or
- from 300°C to 500°C; or
- from 310°C to 500°C; or
- from 280°C to 480°C; or
- from 290°C to 480°C; or
- from 300°C to 480°C; or
- from 310°C to 480°C; or
- from 280°C to 460°C; or
- from 290°C to 460°C; or
- from 300°C to 460°C; or
- from 310°C to 460°C.

In some embodiments, thermal visbreaking is carried out in the absence of or substantially in the absence of oxygen, wherein substantial absence of oxygen means less than or equal to 1.0% by weight, less than or equal to 0.10% by weight, or less than or equal to 0.01% by weight, based on the total weight of polymer in the thermal visbreaking zone.

As known by the technical expert, the extent of visbreaking, thus the increase of melt flow index in the thermal visbreaking step, is mainly influenced by the temperature and by the specific energy input.

In an extruder device, the specific energy input (SEI) refers to the energy input that is mechanically applied to the melt through the rotation of the screws and which correlates to the power consumption of the motor. It can be expressed in kWh/kg. The higher the temperature and/or the SEI value, the higher will be the melt flow index value resulting from the thermal visbreaking step.

Indicatively, the SEI value may range from 0.15 to 0.7 kWh/kg, preferably from 0.20 to 0.5 kWh/kg.

According to the present disclosure a viscosity parameter of the visbroken recycled polyolefin of the first extruder is measured. Based on the difference between the measured value and a pre-set target value, the temperature and/or SEI in the first extruder is adjusted thereby adjusting the extend of thermal visbreaking and thus the properties of the visbroken polyolefin. To measure the parameter an in-line or on-line measuring device may be provided. The measuring device may be a rheometer, which measures the viscosity of the molten recycled polyolefin, preferably downstream of the first stage extruder and upstream of the second stage extruder. Alternatively, a rheometer may be provided that measures the viscosity of the molten recycled polyolefin from a slip stream taken from the die end of the first stage extruder.

The measurement data received may be sent to the computing unit operation device, which based on the difference between the measured viscosity of the molten first polyolefin material and a pre-set target viscosity adjusts the temperature and/or SEI value of the first stage extruder.

In some embodiments, the amount of polyolefin supplied to the extruder device, may be determined via gravimetric dosing.

In some preferred embodiments, the amount of polyolefin supplied to the extruder device, in particular the hopper of the extruder device is preferably regulated by a feeding device such as a rotary valve or a screw feeder. By varying the speed of the feeding device, the amount of polyolefin supplied to the extruder device can be altered. The speed of the feeding device is preferably controlled by a controller in a way that the fed amount of polyolefin powder corresponds to a preselected set-point corresponding to the desired portion of the polyolefin in the polyolefin composition.

According to a preferred embodiment, it is ensured that the melt flow rate of the polyolefin composition is kept constant by adjusting the flow rates of the second polyolefin material and/or additives to the extruder device based on the difference between a preset viscosity value and the measured viscosity value of the polyolefin composition. By using the measured viscosity value of the first polyolefin material from the first stage extruder for adjusting the temperature and/or SEI in the first stage extruder as well as using the measured viscosity value of the polyolefin composition for adjusting the flow rates of second polyolefin and/or additives, small variations in the speed of the second polyolefin feeding device and variations in the first polyolefin material composition are compensated. This stands in contrast to simply using set points derived from the recipe of the polyolefin composition for regulating the flow rates of the one or more additives and/or second polyolefin as well as using set points for the temperature and/or SEI in the first extruder..

In some embodiments, the first polyolefin material may be present in the final polyolefin composition at 30 to 70 wt.%, preferably 35 to 60 wt.%, most preferably 40 to 55 wt% based on the weight of the polyolefin composition.

Figure 1 shows schematically an exemplary set-up for preparing a polyolefin composition according to the present disclosure.

A first polyolefin material is supplied to the hopper (2) of a first stage extruder (1), the first polyolefin material being derived from . The first stage extruder (1) may preferably be provided with vacuum degassing for humidity removal (3) and a melt filter section (4). The molten stream is supplied via line (5) to the entry point (6) of the second stage extruder (7). A second polyolefin material, preferably virgin polymer in silos (8,9) is fed to the second stage extruder (7) via line (10), which receives the polymer either by feeding device (11) equipped with loss in weight metering device (12) or by the feeding device (14) equipped with a mass flow metering device (13). The entry point (6) is preferably downstream the feeding point of the feeding point for the second polyolefin material. Preferably, the second polyolefin material is already in a molten state when the second polyolefin stream is combined with the molten stream of first polyolefin material.

Additives and reinforcing agents can be supplied via feeding devices (15, 17) provided with metering devices (16, 18). The second stage extruder (7) is associated to an underwater pelletizer (19) which is supplied with water via line (20), water recirculation pump (21) and water tank (22). The pellets exiting the pelletizer are conveyed via line (23) to a spin drier (24). Dry pellets can then be fed via line (25) to a detecting unit in the form of a pellet metering device (26) and further to a storage vessel (not shown).

The first polyolefin material is fed to the first stage extruder (1), which is operated under thermal visbreaking conditions. Thermal visbreaking includes a treatment of the polyolefin at a temperature and/or mechanical shear energy sufficient to cause polymer chain scission to predominate over polymer chain branching or crosslinking.

In some embodiments, the thermal visbreaking is carried out by heating the polyolefin at a temperature equal to or greater than 280°C, preferably at a temperature equal to or greater than 290°C, more preferably at a temperature equal to or greater than 300°C, most preferably at a temperature equal to or greater than 310°C, the preferred upper limit being of 500°C in all cases.

As known by the technical expert, the extent of visbreaking, thus the increase of melt flow index in the thermal visbreaking step, is mainly influenced by the temperature and by the specific energy input.

A viscosity parameter of the visbroken recycled polyolefin of the first extruder is measured. In the exemplary embodiment, a measuring device (35) is provided. The measuring device may be an in-line rheometer, which receives a slip stream (36) branching off from line (5). The measuring device (35) sends a signal (37) indicative of the viscosity of the molten first polyolefin material to a computing unit operation device (27). The computing unit operation device compares the measured viscosity of the molten recycled polyolefin composition and a pre-set target viscosity. Based on the difference, the computing unit operation device (27) sends a signal (31) to a control unit (43) of the first stage extruder (1), which in turn adjusts the temperature and/or SEI value of the first stage extruder (1) and thereby adjusting the degree of visbreaking.

Preferably the measuring device measures the viscosity of the molten first polyolefin material downstream of the melt filter section (4), such that possible contaminants are removed before measuring takes place, preventing erroneous readings.

The computing unit operation device (27) may be a centralized computing unit, which receives various signals, for controlling feeds and/or the first extruder.
For example, the computing unit operation device (27) may receive input data (28) from the pellet metering device (26) and sends output data (29, 30) to controllers (34, 33) of the feeding devices (11, 13, 15, 17). Furthermore, the extruder control units (43, 44) may receive output signals (31, 32) for controlling the process parameters of the first and second stage extruder device.

In an alternative embodiment, not shown, a detecting unit may be provided, which detecting unit measures the viscosity of the polymer exiting the second stage extruder. The detecting unit may for example be a rheometer that measures the melt flow rate of the polymer melt exiting the second stage extruder between a filter and a pelletizer.

Based on a difference between the measured melt flow rate of the polymer melt and a pre-set target melt flow rate, the flow rate of the second polyolefin and/or additives supplied to the second stage extruder may be adjusted.

## Claims

1. A process for preparing a polyolefin composition comprising a first polyolefin and a second polyolefin material, wherein at least the first polyolefin material is derived from post consumer waste, said process being carried out in a cascade extrusion process comprising the following steps:
i) supplying the first polyolefin material to a first stage extruder and forming a molten first polyolefin material;
ii) processing the molten first polyolefin in the first stage extruder under visbreaking conditions at a temperature from 280°C to 500°C and a SEI value from 0.15 to 0.7 kWh/kg;
iii) feeding the molten first polyolefin material stream coming from the first extruder to a feeding inlet of a second stage extruder located after a feeding point of the second polyolefin material;
iv) feeding second polyolefin material at a flow rate to said feeding point of the second stage extruder device and extruding the polyolefin composition in a pelletized form;
v) measuring a viscosity of the molten first polyolefin material;
**characterized in that** a computing unit operation device, receiving data on measured viscosity of the molten first polyolefin material adjusts the temperature and/or SEI value of the first stage extruder in response to a difference between the measured viscosity of the molten first polyolefin material and a pre-set target viscosity.

2. The process of claim 1, wherein the molten first polyolefin material is passed through a filtering device for removing contaminants from the melt, and wherein the viscosity of the molten first polyolefin material is measured downstream of the filtering device.

3. The process of claim 1 or 2, wherein the first stage extruder is provided with vacuum degassing for humidity removal.

4. The process of any one of claims 1 to 3, wherein the second polyolefin material is a virgin polyolefin that derives from polymerization of olefins such as ethylene, propylene, butene-1, hexene-1, octene-1 and mixtures thereof.

5. The process of any one of claims 1 to 4, wherein the first polyolefin material comprises a mixture of polyethylene and polypropylene in a weight ratio 99:1 to 1:99.

6. The process of any one of claims 1 to 5, wherein the polyolefin composition further comprises additives and optionally, reinforcing agents.

7. The process of any one of claims 1 to 6, wherein a detecting unit is provided, the detecting unit measuring at least one parameter of the polyolefin composition after the second stage extruder, wherein the computing unit operation device receives the data from the detecting unit and adjusts the flow rate of the second polyolefin to the second stage extruder in response to a difference between the measured parameter and a preset target parameter.

8. The process of claim 7, wherein the detecting unit measures the viscosity and/or flow rate of the polyolefin composition after the second stage extruder.

9. The process of claim 8, wherein the detecting unit measures the viscosity of the polyolefin melt upstream of a pelletizer.

10. The process of claim 9, wherein the computing unit operation device is a central control unit receiving signals from the viscosity measurement and the detecting unit, and sends respective control signals to control units of the first stage extruder, second stage extruder, and the feeding devices for feeding the second stage extruder.
